# EUROPEAN PATENT APPLICATION

(11) **EP 3 657 645 A1**
(43) Date of publication of application: **27.05.2020**
(21) Application number: 19210624.3
(22) Date of filing: 21.11.2019
(51) Int. Cl.: H02K 5/16, H02K 7/116, H02K 9/19, H02K 5/20

(54) **INTEGRATED CENTRAL DRIVE SYSTEM**

(30) Priority: 26.11.2018 CN 201821958141 U
(71) Applicant: ZF Drivetech (Suzhou) Co., Ltd., Shuhou, Jiangsu 215021 (CN)
(72) Inventor: Ye, Weichen, Suzhou, Jiangsu (CN); Li, Kehua, Suzhou, Jiangsu 215021 (CN); Zhu, Zhijian, Suzhou, Jiangsu 215021 (CN); Dong, Ye, Suzhou, Jiangsu 215021 (CN); Wang, Yue, Suzhou, Jiangsu 215021 (CN)
(74) Representative: ZF Friedrichshafen AG

(57) **Abstract**

The disclosure provideds an integrated central drive system. The integrated central drive system comprises an electric motor module and a mechanical oil pump module. The electric motor module comprises an electric motor housing and an electric motor accommodated inside the electric motor housing. The electric motor comprises a stator fixed to the electric motor housing, a rotor rotatably arranged inside the stator, and an output shaft fixed to the rotor. The mechanical oil pump module is coupled to the electric motor module, and the mechanical oil pump module comprises an oil pump module end cap and a mechanical oil pump. The integrated central drive system comprises a lubricating oil flow circuit partially formed in the electric motor housing, the oil pump module end cover and the output shaft, and the mechanical oil pump is driven by the output shaft of the electric motor via a gear set for circulating lubricating oil in the lubricating oil flow circuit of the integrated central drive system.

## Description

### Technical Field

The present utility model relates to an integrated central drive system, and in particular to an integrated central drive system for a new energy vehicle.

### Background Art

In current drive systems for new energy commercial vehicles, the electric motor direct drive system is the one mostly used (that is, an output shaft of an electric motor is directly connected to a drive axle). However, the electric motor of the electric motor direct drive system is bulky, consumes a large amount of materials, and costs much. In addition, the electric motor in the electric motor direct drive system generally operates at low and medium rotation speeds, resulting in low efficiency of the electric motor. By introducing a speed reduction mechanism into the direct drive system, the same system output torque can be achieved with a reduced electric motor size, thereby reducing the weight and dimensions of the electric motor, while also increasing the rotation speed of the electric motor, so that the electric motor runs within a more economical rotation speed range. This is also helpful in reducing the size of a controller of the electric motor. However, as the rotation speed of the electric motor increases, the requirements for system lubrication also become more stringent, especially for the lubrication of bearings of the electric motor and the lubrication of the speed reduction mechanism. In addition, since the electric motor and lubricating oil need to be cooled at the same time, the requirements for the cooling of the system have also become an urgent problem to be solved.

### Summary of the Utility Model

The present utility model provides an integrated central drive system for solving the above problems. The integrated central drive system comprises: an electric motor module that comprises an electric motor housing and an electric motor accommodated inside the electric motor housing, the electric motor comprising a stator fixed to the electric motor housing, a rotor rotatably arranged inside the stator, and an output shaft fixed to the rotor; and a mechanical oil pump module coupled to the electric motor module, the mechanical oil pump module comprising an oil pump module end cap and a mechanical oil pump, wherein the integrated central drive system comprises a lubricating oil flow circuit partially formed in the electric motor housing, the oil pump module end cover and the output shaft, and the mechanical oil pump is driven by the output shaft of the electric motor via a gear set for circulating lubricating oil in the lubricating oil flow circuit of the integrated central drive system.

According to the central drive system of the present utility model, since the mechanical oil pump is driven by the output shaft of the electric motor via the gear set, the lubrication ability of the lubrication system can increase as the rotation speed of the electric motor increases, thereby ensuring that proper lubrication is provided to the central drive system.

### Brief Description of the Drawings

Fig. 1 shows a cross-sectional view of an integrated central drive system in accordance with an embodiment of the present utility model,
Fig. 2 shows a cross-sectional view of an oil pump module end cap of an oil pump module of the integrated central drive system, and
Fig. 3 schematically shows a lubricating oil flow circuit of the integrated central drive system.

### Detailed Description of Embodiments

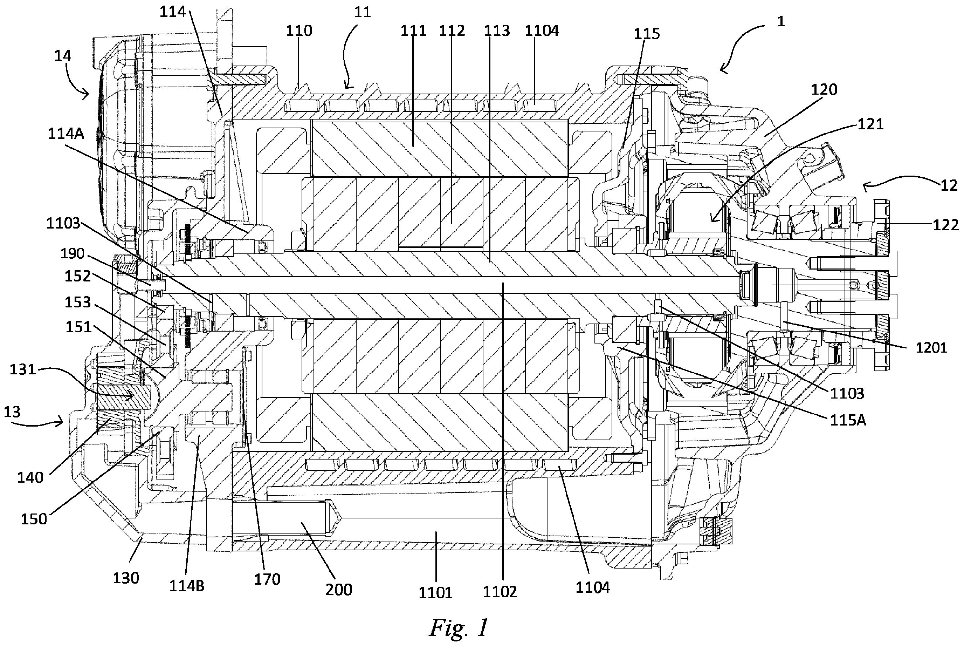

In the following, an embodiment of the utility model will be further explained with reference to the accompanying drawings.
Before the detailed description, it is to be noted that the orientation terms "front", "back", "left", "right", "upper", and "lower" in the present disclosure are used with reference to the drawings, and are not intended to limit the scope of protection of the present disclosure.
An embodiment of an integrated central drive system 1 in accordance with the present utility model is shown in Fig. 1. The integrated central drive system 1 of the present utility model can be applied to a hybrid vehicle or a battery electric vehicle. However, the application of the integrated central drive system 1 of the present utility model is not limited thereto, and it can also be used as a central drive system for other kinds of vehicles (e.g., ships, trains, aircrafts, etc.).

As shown, the integrated central drive system 1 comprises an electric motor module 11, a speed reducer module 12 and an oil pump module 13. The speed reducer module 12 is attached to one end of the electric motor module 11 for reducing the output rotation speed of the electric motor and increasing the output torque of the electric motor. The oil pump module 13 is attached to the other end of the electric motor module 11 for circulating lubricating oil in a lubricating oil flow circuit of the integrated central drive system 1. In addition, the integrated central drive system 1 further comprises a junction box module 14. The junction box module 14 is connected to the electric motor module 11 to provide power to the electric motor module 11.

In accordance with an aspect of the present utility model, the integrated central drive system 1 circulates the lubricating oil in the lubricating oil flow circuit of the system 1 using a mechanical oil pump in the oil pump module 13 driven by an output shaft of the electric motor of the electric motor module 11. The various components of the integrated central drive system 1 will be described in detail below.

Referring to Fig. 1, the electric motor module 11 comprises an electric motor housing 110 and the electric motor accommodated inside the electric motor housing. The electric motor housing 110 may be manufactured by casting. The electric motor used in the central drive system 1 of the present utility model may be, for example, a three-phase asynchronous electric motor or a permanent magnet synchronous electric motor. The electric motor comprises an electric motor stator 111 fixed to the electric motor housing 110, an electric motor rotor 112 rotatably arranged inside the electric motor stator, and an electric motor output shaft 113 fixed to the electric motor rotor. Two cover plates 114, 115 are attached to the left and right ends of the electric motor housing 110 via fasteners (e.g., bolts), and two ends of the electric motor output shaft 113 are supported in the two cover plates by bearings (e.g., deep groove ball bearings). Specifically, a bearing seat 114A, 115A is formed at a central portion of each of the cover plates, and the bearings for supporting the electric motor output shaft 113 are mounted in the bearing seats 114A, 115A. On the inner side of the bearings for the electric motor output shaft 113 in an axial direction of the electric motor output shaft, seals are respectively provided between the electric motor output shaft 113 and the bearing seats 114A, 115A to prevent the lubricating oil from entering the electric motor.

The speed reducer module 12 comprises a speed reducer housing 120 and a speed reducer 121 accommodated inside the speed reducer housing. The speed reducer housing 120 is attached to the electric motor housing 110 of the electric motor module 11 at one end of the electric motor module 11 by means of a fastener (e.g., bolts). One end of the electric motor output shaft 113 extends into the speed reducer module 12 so as to be coupled to the speed reducer 121.

The speed reducer 121 used in the drive system of the present utility model may be a planetary gear reduction mechanism. The planetary gear reduction mechanism comprises a ring gear, a sun gear, a carrier and a planet gear supported on the carrier. The ring gear is fixed to the speed reducer housing 120, the sun gear is coupled to the electric motor output shaft 113, the carrier is provided between the ring gear and the sun gear, and the planet gear on the carrier meshes with the ring gear and the sun gear. An output flange 122 of the integrated central drive system 1 is coupled to the carrier of the speed reducer 121 and is supported inside the speed reducer housing 120 via two tapered roller bearings.

The circulation of the lubricating oil in the lubricating oil flow circuit is achieved by the oil pump module 13. Usually, the oil pump used in the central drive system 1 for the new energy vehicle is an electric pump. However, as described above, according to the present utility model, the circulation of the lubricating oil can be achieved by a mechanical oil pump driven by the electric motor output shaft 113. The oil pump module 13 of the present utility model will be described in detail below.

The oil pump module 13 comprises an oil pump module end cap 130 and a mechanical oil pump assembly 131. The oil pump module end cap 130 is attached to the electric motor module 11 and comprises a lubricating oil passage forming a part of the lubricating oil flow circuit. The mechanical oil pump assembly 131 is used to flow the lubricating oil through the lubricating oil passage, and comprises a mechanical oil pump 140 and a pump drive device 150.

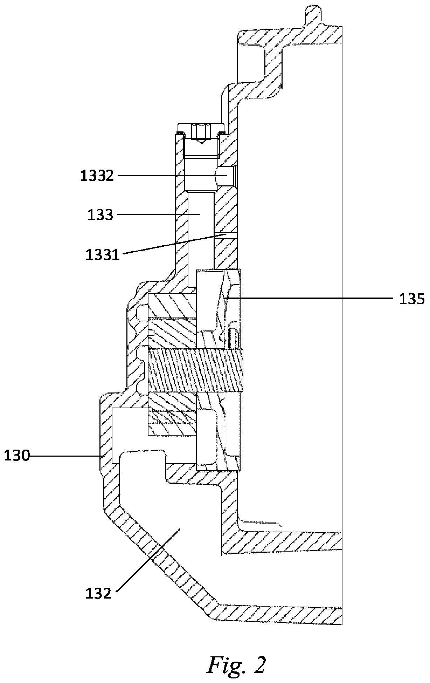

As shown in Fig. 2, the oil pump module end cover 130 is a plate-shaped member formed by casting. The oil pump module end cap 130 comprises a first passage portion 132 integrally formed at a lower portion of the end cap, a second passage portion 133 integrally formed at an upper portion of the end cap, and a pump support 134 in fluid communication with the first passage portion and the second passage portion. The pump support 134 is generally in the form of a recess 134 which opens towards the side of the electric motor module. A pump cover 135 cooperates with the opening of the recess 134 to form a pump chamber. The mechanical oil pump 140 of the mechanical oil pump assembly 131 is arranged in the pump chamber such that an inflow end of the mechanical oil pump 140 is in fluid communication with the first passage portion 132 and an outflow end thereof is in fluid communication with the second passage portion 133. Accordingly, the first passage portion 132, the second passage portion 133 and the mechanical oil pump 140 together form a lubricating oil passage in the oil pump module end cover 130. In addition, the mechanical oil pump 140 comprises an input shaft, which extends through the pump cover 135 into a pump drive chamber described later and is coupled to a pump drive device 150 therein.

As shown in Fig. 1, the oil pump module end cap 130 is attached to the cover plate at the left end of the electric motor module 11 to define the pump drive chamber. The pump drive device 150 of the mechanical oil pump assembly 131 is provided in the pump drive chamber. The pump drive device 150 comprises a pump drive shaft 151 and a gear set according to the present utility model. One end of the pump drive shaft 151 is mounted on a further bearing seat 114B of the left end cover plate 114 via a bearing. A sealing cover 170 is attached to the inner side of the bearing seat 114B of the left end cover 114 in the axial direction of the electric motor output shaft to prevent the lubricating oil from flowing into the electric motor from the pump drive chamber. The other end of the pump drive shaft 151 is mechanically connected to the input shaft of the mechanical oil pump 140. The gear set comprises a drive gear 152 fixed onto the electric motor output shaft 113, and a driven gear 153 fixed onto the pump drive shaft 151. The drive gear 152 meshes with the driven gear 153 to transmit the rotational motion of the electric motor output shaft 113 to the pump drive shaft 151, thereby driving the mechanical oil pump 140 so that the lubricating oil can circulate in the lubricating oil flow circuit of the system.

The mechanical oil pump 140 used in the central drive system of the present utility model may be, but is not limited to, a gear pump or a vane pump. Since those skilled in the art are aware of the working principle of the mechanical oil pump, it will not be described in detail herein. The lubricating oil flow circuit of the integrated central drive system 1 of the present utility model will be described in detail below.

The integrated central drive system 1 comprises a lubricating oil flow circuit partially formed in the electric motor housing 110, the oil pump module end cover 130 and the electric motor output shaft 113 according to the present utility model. Specifically, the lubricating oil flow circuit comprises a lubricating oil accommodation portion 1101 integrally formed at the bottom of the body of the electric motor housing 110, the lubricating oil passage integrally formed in the oil pump module end cover 130 as described above, and an axial lubricating oil passage 1102 and radial lubricating oil passages 1103 integrally formed in the electric motor output shaft 113. The lubricating oil is returned to the lubricating oil accommodation portion 1101 after lubricating the gears and bearings in the system, and a lubricating oil filter 200 is provided in the lubricating oil accommodation portion 1101. One end (the first passage portion 132) of the oil passage in the oil pump module end cap 130 is in fluid communication with the lubricating oil accommodation portion 1101 through a through hole 180 in the left end cover 114. The other end (the second passage portion 133) of the lubricating oil passage in the oil pump module end cover 130 has two outlets. A first outlet 1331 of the two outlets is connected to the pump drive chamber. A second outlet 1332 is connected, via an oil pipe 190, to one end of the axial lubricating oil passage 1102 in the electric motor output shaft 113. A seal 192 is provided between the oil pipe 190 and the axial lubricating oil passage 1102. The radial lubricating oil passages 1103 in the electric motor output shaft 113 are in fluid communication with the axial lubricating oil passage 1102 and are respectively formed at positions corresponding to the bearings and the speed reducer. The other end of the axial lubricating oil passage 1102 is in communication with a radial oil passage 1201 formed in the output flange of the system.

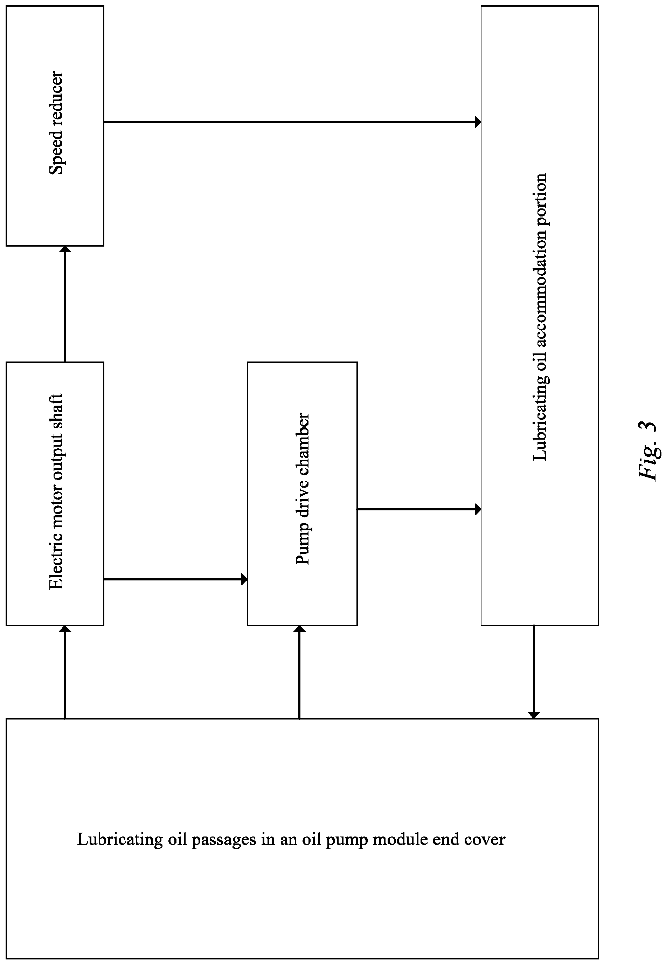

Fig. 3 schematically shows a lubricating oil flow circuit in accordance with the present utility model.
Under the action of the mechanical oil pump, the lubricating oil in the lubricating oil accommodation portion 1101 flows through the lubricating oil filter 200 into the lubricating oil passage of the oil pump module end cover 130. The lubricating oil then exits the lubricating oil passage of the oil pump module end cap 130 from the first outlet 1331 and the second outlet 1332. The lubricating oil exiting from the first outlet 1331 enters the pump drive chamber, lubricates the gear set and the bearing of pump drive shaft 151, and then flows back into the lubricating oil accommodation portion 1101 through an auxiliary oil passage (not shown) in the electric motor housing 110.

The lubricating oil exiting from the second outlet 1332 enters the axial lubricating oil passage 1102 of the electric motor output shaft 113. At one end of the axial lubricating oil passage 1102, a part of the lubricating oil flows out through the radial lubricating oil passage 1103 and lubricates the bearing of the electric motor output shaft 113, and then flows back into the lubricating oil accommodation portion 1101 through the pump drive chamber and the above-described auxiliary oil passage. Another part of the lubricating oil flows to the other end of the electric motor along the axial lubricating oil passage 1102, flows out through the radial lubricating oil passage 1103 formed at the right end of the electric motor output shaft 113, and lubricates the bearing of the electric motor output shaft 113, the components of the speed reducer and the tapered roller bearings. The lubricating oil is then returned to the lubricating oil accommodation portion 1101 through a gap between the electric motor module 11 and the speed reducer and an auxiliary oil passage (not shown).

In summary, the present utility model employs a forced oil lubrication method for the bearings and the speed reducer. The driven gear on the pump drive shaft 151 is driven by the drive gear on the electric motor output shaft 113 to operate the mechanical oil pump, such that the lubricating oil is filtered by the lubricating oil filter 200 and then enters the lubricating oil passage and the mechanical oil pump inside the oil pump module end cover 130, and enters the electric motor output shaft 113. At the same time, the gear set, the bearings for the electric motor, the speed reducer and the bearings for the output flange are lubricated one by one by passages reserved in the oil pump module end cover 130 and the electric motor output shaft 113, and the lubricating oil is returned into the lubricating oil accommodation portion 1101 through oil return passages in the housings. As soon as the drive system operates and the electric motor rotates, the mechanical oil pump begins to rotate and continuously lubricates the system.

According to another aspect of the present utility model, the integrated central drive system 1 of the present utility model further comprises a coolant passage 1104 (so-called "water jacket") integrally formed in the electric motor housing 110. The coolant passage 1104 is connected to an external coolant pump and radiator (not shown). The coolant passage 1104 is formed adjacent to a part (in this embodiment, the lubricating oil accommodation portion 1101) of the lubricating oil flow circuit of the entire system. In this embodiment, the coolant passage 1104 is formed in the electric motor housing 110 in the form of a spiral pipeline such that a coolant in the coolant passage 1104 can exchange heat with the lubricating oil in the lubricating oil flow circuit. Specifically, as shown in Fig. 1, the coolant flows around the outer periphery of the electric motor along the coolant passage 1104 to cool the stator 111 of the electric motor. At the same time, the coolant flowing to the bottom of the electric motor housing 110 along the coolant passage 1104 exchanges heat with the lubricating oil in the lubricating oil accommodation portion 1101 to cool the lubricating oil. That is to say, the cooling system of the present utility model is capable of simultaneously cooling the stator 111 of the electric motor and the lubricating oil in the lubricating oil flow circuit.

The lubricating oil, while lubricating the components of the integrated central drive system 1, also carries away the heat and eventually enters the lubricating oil accommodation portion. The lubricating oil in the lubricating oil accommodation portion is cooled by the cooling system while entering the lubricating oil filter and the mechanical oil pump through a coolant passage reserved in the bottom of the electric motor housing. This makes up the entire oil cooling circuit. The design of double cooling circuits with water cooling and oil filling ensures that the whole system can work in the optimal temperature range.
It is to be noted that although the above describes an integrated central drive system 1 which utilizes a mechanical oil pump driven by an output shaft of an electric motor to circulate lubricating oil, the cooling system disclosed herein can also be used in combination with a central drive system which circulates the lubricating oil in a lubricating oil flow circuit using a separate electric pump, as long as the coolant passage integrally formed in the electric motor housing is formed in such a manner that the coolant in the coolant passage can exchange heat with the lubricating oil in the lubricating oil flow circuit.

Although the particular embodiments of the present utility model have been described, a person skilled in the art should understand that these are merely illustrative, and that the scope of protection of the present utility model is defined by the appended claims. Various alterations or modifications can be made by a person skilled in the art to these embodiments without departing from the principle and essence of the present utility model; however, these alterations and modifications all fall within the scope of protection of the present utility model.

## Claims

1. An integrated central drive system, comprising
an electric motor module that comprises an electric motor housing and an electric motor accommodated inside the electric motor housing, the electric motor comprising a stator fixed to the electric motor housing, a rotor rotatably arranged inside the stator, and an output shaft fixed to the rotor; and
a mechanical oil pump module coupled to the electric motor module, the mechanical oil pump module comprising an oil pump module end cap and a mechanical oil pump,
**characterized in that** the integrated central drive system comprises a lubricating oil flow circuit partially formed in the electric motor housing, the oil pump module end cover and the output shaft, and
the mechanical oil pump is driven by the output shaft of the electric motor via a gear set for circulating lubricating oil in the lubricating oil flow circuit of the integrated central drive system.

2. The integrated central drive system according to claim 1,
**characterized by** further comprising
a speed reducer attached to the electric motor housing, wherein the output shaft of the electric motor is coupled to the speed reducer.

3. The integrated central drive system according to claim 2,
**characterized in that**
the speed reducer is a planetary gear speed-reduction mechanism.

4. The integrated central drive system according to claim 1 or 2,
**characterized in that**
the electric motor module comprises cover plates which are fixed to the electric motor housing at two ends of the electric motor module, and a central portion of each of the cover plates is formed with a bearing seat in which a bearing for supporting the output shaft of the electric motor is mounted.

5. The integrated central drive system according to claim 4,
**characterized in that**
a pump chamber is provided in the oil pump module end cover, and the mechanical oil pump is provided in the pump chamber and is in fluid communication with the part of the lubricating oil flow circuit that is in the oil pump module end cover;
the oil pump module end cap is attached to one of the cover plates to define a pump drive chamber;
the integrated central drive system further comprises a pump drive shaft in driving connection with the mechanical oil pump and the gear set, and the pump drive shaft and the gear set constitute a pump drive device, which is provided in the pump drive chamber; and
the mechanical oil pump comprises an input shaft, which extends into the pump drive chamber and is in driving connection with the pump drive shaft.

6. The integrated central drive system according to claim 5,
**characterized in that**
the bottom of the electric motor housing has a lubricating oil accommodation portion integrally formed in the body of the electric motor housing.

7. The integrated central drive system according to claim 6,
**characterized in that**
an axial lubricating oil passage and radial lubricating oil passages are formed in the output shaft, the axial lubricating oil passage extends through the output shaft, the radial lubricating oil passages are in fluid communication with the axial lubricating oil passage, and the radial lubricating oil passages are formed in the output shaft at positions corresponding to the bearings for the output shaft and to the speed reducer; and
a first lubricating oil passage portion and a second lubricating oil passage portion, which constitute a part of the lubricating oil flow circuit of the integrated central drive system, are formed inside the body of the oil pump module end cap, wherein one end of the first lubricating oil passage portion is in fluid communication with the lubricating oil accommodation portion, and the other end thereof is in fluid communication with an inflow end of the mechanical oil pump; and one end of the second lubricating oil passage portion is in fluid communication with an outflow end of the mechanical oil pump, and the other end thereof comprises a first outlet and a second outlet, the first outlet being in fluid communication with the pump drive chamber, and the second outlet being in fluid communication with the axial lubricating oil passage in the output shaft.

8. The integrated central drive system according to claim 7,
**characterized in that**
the gear set comprises a drive gear fixedly arranged on the output shaft and a driven gear fixedly arranged on the pump drive shaft, and the drive gear meshes with the driven gear to transmit a rotational motion of the output shaft to the pump drive shaft.

9. The integrated central drive system according to claim 1,
**characterized in that**
the electric motor is a three-phase asynchronous electric motor or a permanent magnet synchronous electric motor.

10. The integrated central drive system according to claim 1,
**characterized in that**
a coolant passage for cooling the stator is integrally formed in the body of the electric motor housing, the coolant passage being formed adjacent to a part of the lubricating oil flow circuit such that a coolant in the coolant passage is capable of exchanging heat with the lubricating oil in the lubricating oil flow circuit.

11. The integrated central drive system according to claim 1,
**characterized in that**
the integrated central drive system is an integrated central drive system for a new energy vehicle.
